# EUROPÄISCHE PATENTSCHRIFT

(11) **EP 3 624 927 B1**
(45) Veröffentlichungstag und Bekanntmachung des Hinweises auf die Patenterteilung: **03.09.2025**
(21) Anmeldenummer: 18726351.2
(22) Anmeldetag: 08.05.2018
(51) Int. Cl.: B01D 61/18, B01D 61/20, B01D 65/02

(54) **EINWEGSFILTRATIONSMODUL, EINWEGSREINIGUNGSMODUL JEWEILS EINSETZBAR IN EIN MODULARES FILTRATIONSSYSTEM**
SINGLE-USE FILTERING MODULE AND SINGLE-USE CLEANING MODULE, EACH INSERTABLE IN A MODULAR FILTERING SYSTEM
MODULE DE FILTRATION À USAGE UNIQUE OU MODULE DE NETTOYAGE À USAGE UNIQUE, POUVANT ÊTRE UTILISÉS RESPECTIVEMENT POUR UN SYSTÈME DE FILTRATION MODULAIRE

(30) Priorität: 15.05.2017 DE 102017110482
(43) Veröffentlichungstag der Anmeldung: 25.03.2020
(73) Patentinhaber: Sartorius Stedim Biotech GmbH, 37079 Göttingen (DE)
(72) Erfinder: GRUMMERT, Ulrich, 37242 Bad Sooden-Allendorf (DE); LEUTHOLD, Martin, 37079 Goettingen (DE)
(74) Vertreter: Novagraaf International SA
(86) Internationale Anmeldenummer: PCT/EP2018/061916
(87) Internationale Veröffentlichungsnummer: WO 2018/210644

(56) Entgegenhaltungen:
- EP-A1- 2 119 492
- EP-A1- 2 255 865
- EP-A1- 2 445 616
- EP-A1- 2 907 565
- EP-B1- 2 445 616
- DE-U1- 202009 003 680
- US-A1- 2008 269 468
- SARTORIUS STEDIM BIOTECH: "SARTOFLOW? 10 Stainless Steel Holder", 19 August 2006 (2006-08-19), pages 1 - 2, XP055285818, Retrieved from the Internet <URL:http://www.sartorius.de/fileadmin/fm-dam/DDM/Bioprocess-Solutions/Purification_Technologies/Crossflow_Hardware/Holder/Data_sheets/Data_Sartoflow-10-Holder_SPC2050-e.pdf> [retrieved on 20160705]

## Beschreibung

Die Erfindung betrifft ein modulares Querstromfiltrationssystem für niedervolumige Screening-Anwendungen.

In der biopharmazeutischen Industrie besteht ein großes Interesse an der Isolierung und Untersuchung von Proteinen auf Robustheit und Verhalten in Ultrafiltrations- und Diafiltrationsprozessen (UF bzw. DF) sowie von Puffern auf schützende oder schädliche Wirkungen auf Proteine während solcher UF-/DF-Prozesse. Dieses Interesse besteht in besonderem Maße in frühen Entwicklungsstadien, in denen in der Regel nur geringe Mengen des biologischen Produkts verfügbar sind.

Gegenwärtige Querstromfiltrationssysteme und deren Strömungspfade sind nicht für niedervolumige Testverfahren (Screening-Anwendungen) ausgelegt. so haben selbst die kleinsten kommerziell verfügbaren Filtrationsvorrichtungen mit Flachmembran eine Membranoberfläche von etwa 50 cm². Die bekannten Querstromfiltrationssysteme sind aufgrund ihres durch andere Kriterien bestimmten Aufbaus auch nicht geeignet, mehrere niedervolumige Screening-Prozesse parallel durchzuführen. Ein weiterer Nachteil bezüglich der angestrebten niedervolumigen Screening-Anwendungen besteht darin, dass die bekannten Systeme eine Vielzahl individueller Komponenten (Fluidverbindungen, Ventile, Sensoren etc.) aufweisen, die aufwendig durch Schlauchleitungen fehlerfrei miteinander verbunden werden müssen. Außerdem haben die bekannten, groß angelegten Systeme ein entsprechend großes Totvolumen, was in den oben genannten Anwendungsfällen, wenn nur geringe Proteinlösungsmengen verfügbar sind, äußerst ineffizient ist. Das bedeutet, dass nur eine begrenzte Anzahl von Prozessläufen möglich ist. Dies führt zu Erkenntnislücken, z. B. bei der Bestimmung von Querstromfiltrations-Prozessparametern oder Pufferbedingungen, um eine stabile Zielmolekülumgebung zu erzeugen.

EP 2 907 565 A1 zeigt eine Utrafiltrationseinheit zum Pufferaustausch (Diafiltration) für Proteine in einer keimfreien Umgebung. Dabei werden diverse Einwegelemente verwendet, Filtrationselemente, Ventile, Sensoren (Fluss, pH, Leitfähigkeit, UV, Druck), Behälter und Pumpen). Eine Rezirkulationsschleife kann ebenso vorliegen.

Aus der DE 20 2009 003 680 U1 ist eine Filtrationsanlage bekannt, die im Wesentlichen aus einem vorsterilisierbaren Filtrationssystem zum Einmalgebrauch und wiederverwendbaren Anlageteilen besteht. Das Filtrationssystem basiert auf einem Schlauchsystem und ist als geschlossenes, komplett miteinander verbundenes Gesamtsystem steril verpackt auslieferbar. Es umfasst Ventile, Pumpen, Sensorstellen, Rezirkulationsbehälter, Fluidverbindungen und ein Filtrationsmodul. Das System wird als Ganzes aus seiner Umverpackung entnommen, und die Einwegteile der Ventile, Pumpen und Messstellen werden mit ihren Gegenstücken in der Filtrationsanlage verbunden.

EP 2 119 49 2A1 zeigt ein UF-Tangentialflussfiltrationsystem zur Aufreinigung von Proteinen als Einwegsystem mit diversen Einwegelementen wie Pumpen, Sensoren, Druckregler, Druckmesser, Behälter, Filter.

US 2008/0269468 A1 zeigt einen integrierten Proteinaufreinigungsprozess unter Verwendung diverser Einwegelemente: Filter, Behälter, Transmitter für Druck sowie Schlauchklammern, die als Ventile fungieren und Fluidverbindungen. Das Filtrationssystem wird vorgefertigt und sterilisiert.

EP 2 255 865 A1 zeigt Einwegfiltermembranen, Liner und Sensorports für Tangentialflussfiltrationsysteme.

Aufgabe der Erfindung ist es, unter Berücksichtigung der obigen Aspekte eine möglichst effektive und effiziente Produkt- und Prozessentwicklung basierend auf niedervolumigen Testverfahren zu ermöglichen.

Gelöst wird diese Aufgabe durch ein modulares Querstromfiltrationssystem mit den Merkmalen des Anspruchs 1. Vorteilhafte und zweckmäßige Ausgestaltungen des erfindungsgemäßen Filtrationssystems sind in den Unteransprüchen angegeben.

Das erfindungsgemäße modulare Querstromfiltrationssystem für niedervolumige Screening-Anwendungen umfasst ein vorgefertigtes Filtrationsmodul, wobei das Filtrationsmodul Fluidanschlüsse und mehrere, auf niedervolumige Screening-Anwendungen abgestimmte Komponenten auf weist, die fest in das Filtrationsmodul integriert sind. Gemäß der Erfindung ist das gesamte Filtrationsmodul als Einweg-Filtrationsmodul ausgelegt. Das erfindungsgemäße modulare Querstromfiltrationssystem umfasst ferner ein Reinigungsmodul zum Reinigen von wiederverwendbaren Komponenten des Filtrationssystems, wobei das gesamte Reinigungsmodul als Einweg-Reinigungsmodul ausgelegt ist und einen fest integrierten, mit einem Reinigungsfluid befüllten Reinigungsfluidbehälter aufweist. Das Filtrationsmodul und das Reinigungsmodul sind hinsichtlich ihrer Fluidanschlüsse und ihrer mechanischen Anschlüsse so aufgebaut, dass sie alternativ an derselben Stelle im Filtrationssystem angeordnet und angeschlossen werden können.

Die Erfindung beruht auf der Erkenntnis, dass es vorteilhaft ist, möglichst viele der Komponenten, die in einem Filtrationsprozess zum Einsatz kommen, als Einweg-Komponenten auszulegen. Die vollständige Entsorgung der bereits vorsterilisiert verfügbaren Einweg-Komponenten vermindert nicht nur den Reinigungsaufwand an sich und den damit verbundenen Zeitverlust, sondern eliminiert auch das Risiko, dass z. B. Reste von Giftstoffen oder Antikörpern in den Komponenten verbleiben. Solche Rückstände würden nicht nur die nachfolgenden Experimente verfälschen, sondern würden auch eine Gesundheitsgefahr für das Personal und allgemein ein Sicherheitsrisiko darstellen. Demgegenüber kann dank der Erfindung der Großteil der kontaminierten Komponenten eines Testaufbaus auf einmal schnell und unkompliziert Weise ausgetauscht werden, indem einfach ein gebrauchtes Filtrationsmodul durch ein neues ersetzt wird.

Ein weiterer wesentlicher Vorteil der Erfindung besteht darin, dass die Bereitstellung des Großteils der für ein Filtrationsexperiment benötigten Komponenten in einem als vorgefertigte Einheit ausgebildeten Modul einen äußerst kompakten Aufbau erlaubt. Anstelle üblicher wiederverwendbarer "Universalkomponenten", die für eine Vielzahl von verschiedenen Experimenten und/oder Großanwendungen herangezogen und aufwendig miteinander verbunden werden müssen, stellt die Erfindung einen Satz bereits fertig verbundener Komponenten zur Verfügung, die speziell für eine bestimmte Anwendung ausgelegt sind. Der Wegfall von Verbindungsbauteilen wie etwa Sterilkonnektoren oder Luer-, Schraub- und TRI-Clamp-Verbindungsteilen etc. erlaubt nicht nur eine bauraumoptimierte Auslegung des erfindungsgemäß vorgesehenen Filtrationsmoduls, sondern reduziert auch die Toträume. So kann insbesondere für ein niedervolumiges Screening-Verfahren ein spezielles Filtrationsmodul mit entsprechend klein dimensionierten Komponenten bereitgestellt werden, insbesondere einem Filter mit einer angemessenen kleinen Fläche. Die Verwendung solcher speziell ausgelegter vorgefertigter Filtrationsmodule ist für den Benutzer äußerst einfach und schließt Fehler beim Testaufbau weitestgehend aus.

Für den eigentlichen Filtrationsvorgang ist eine Einweg-Querstromfiltrationsvorrichtung mit einem Filter vorgesehen.

Gemäß einer ersten Variante der Erfindung ist die Filtrationsvorrichtung fest in das Filtrationsmodul integriert, d. h. die Filtrationsvorrichtung ist fester Bestandteil des Filtrationsmoduls. Bei dieser Variante kann die Filtrationsvorrichtung somit nicht falsch angeschlossen werden, und es entsteht kein Zusatzaufwand beim Aufbau.

Gemäß einer zweiten Variante der Erfindung ist die Filtrationsvorrichtung eine separate Einweg-Filtrationsvorrichtung, die als Einheit in oder an das Filtrationsmodul steckbar ist. Diese Variante erlaubt größtmögliche Flexibilität bei der Auswahl einer geeigneten Filtrationsvorrichtung (Filtereigenschaften, Filtergröße etc.), ohne dass die Installation der Filtrationsvorrichtung den Aufbauaufwand signifikant erhöht. Idealerweise werden beim An- oder Einstecken der Filtrationsvorrichtung gleichzeitig automatisch alle erforderlichen Fluidverbindungen hergestellt.

Der Aufwand für das Anschließen der für ein bestimmtes Experiment benötigten Komponenten reduziert sich umso mehr, je mehr dieser Komponenten bereits im Filtrationsmodul vormontiert sind. Deshalb erweist sich ein Filtrationsmodul mit einem Einweg-Strömungspfad als vorteilhaft, in den bereits ein Rezirkulationsbehälter für Prozessfluid und/oder wenigstens ein Sensor und/oder wenigstens ein Strömungsventil und/oder eine Pumpe wenigstens teilweise fest integriert sind. Im Filtrationsmodul kann auch bereits ein Vorratsbehälter für Diafiltrationsmedium vorgesehen sein. Außerdem kann das Filtrationsmodul Anschlüsse (Ports) aufweisen, mit denen es möglich ist, Medien (z. B. Diafiltrationsmedium) von externen Quellen zuzuführen.

Unter einem Strömungspfad sollen hier diejenigen Komponenten des Filtrationssystems verstanden werden, mit denen das Prozessfluid in Berührung kommt und die zumindest einen Teilabschnitt des Weges des Prozessfluids durch das Filtrationssystem vorgeben. Im Filtrationssystem können mehrere Strömungspfade vorgesehen sein, auch innerhalb eines Filtrationsmoduls oder Reinigungsmoduls (wie später noch genauer erläutert wird), die je nach gewähltem Prozessablauf alternativ ausgewählt werden können oder parallel oder sequentiell durchströmt werden können. Hier sollen vornehmlich der Strömungspfad bzw. die Strömungspfade innerhalb eines Filtrationsmoduls betrachtet werden.

Bei den zuvor erläuterten Erfindungsvarianten kann die Filtrationsvorrichtung fest in einen Einweg-Strömungspfad integriert sein oder als separate Einheit in einen Einweg-Strömungspfad integriert werden, der selbst wiederum fest in das Filtrationsmodul integriert ist. Jedoch kann der Einweg-Strömungspfad grundsätzlich auch als ganze Einheit in das Filtrationsmodul eingesetzt werden.

Eine Weiterbildung der Erfindung sieht eine Temperaturregelung für das Filtrationsmodul vor. Für bestimmte Experimente ist es von Bedeutung, dass die Temperatur des Prozessfluids während der Filtration konstant auf einem bestimmten Wert gehalten wird; oder es soll das gleiche Experiment bei unterschiedlichen Temperaturen durchgeführt werden, um eine Temperaturabhängigkeit der Ergebnisse dokumentieren zu können. Für solche Fälle ist es vorteilhaft, wenn die Temperatur des gesamten Filtrationsmoduls geregelt werden kann. Eine einfache, aber zweckmäßige Temperaturregelung kann etwa dadurch erreicht werden, dass eine Außenwand des Filtrationsmoduls an eine temperaturgeregelte Oberfläche, insbesondere die eines Peltier-Elements, gekoppelt wird.

Zu einem erfindungsgemäßen modularen Querstromfiltrationssystem gehört auch ein spezielles Reinigungsmodul. Ein solches Reinigungsmodul soll zum Reinigen von wiederverwendbaren Komponenten des Filtrationssystems dienen. Das gesamte Reinigungsmodul ist als Einweg-Reinigungsmodul ausgelegt, sodass sich der Aufwand für die Reinigung erheblich verringert: Zum einen vereinfachen sich Aufbau und Verbindung der für die Reinigung benötigten Komponenten; zum anderen können die benötigten Komponenten schnell und unkompliziert alle auf einmal entsorgt werden.

Gemäß einem besonderen Aspekt der Erfindung weist das Filtrationsmodul und/oder das Reinigungsmodul mehrere Einweg-Strömungspfade auf. Die Mehrzahl von Strömungspfaden innerhalb desselben Moduls kann je nach gewähltem Prozessablauf auf unterschiedliche Weise genutzt werden: Es kann beispielsweise der für den gewünschten Prozess vorgesehene Strömungspfad ausgewählt bzw. eingestellt werden, während der oder die weiteren Strömungspfade zunächst ungenutzt bleiben und eventuell für spätere Experimente noch verwendet werden können. Eine andere Möglichkeit besteht darin, zwei oder mehr Strömungspfade gleichzeitig in einem Experiment oder während eines Reinigungsdurchlaufs zu nutzen. Die verschiedenen Strömungspfade können dann entweder parallel oder sequentiell durchströmt werden. Das Vorsehen mehrerer Strömungspfade, die ggf. auch jeweils als separate Einheit in das Filtrationsmodul oder Reinigungsmodul einsetzbar sind, schafft somit noch mehr Flexibilität und Effizienz.

Die Einbindung bestimmter Komponenten in ein Einweg-Filtrationsmodul oder ein Einweg-Reinigungsmodul ist nicht ohne Weiteres möglich, weil etwa der Antrieb, die Ansteuerung oder die Signalübertragung von außen erfolgen muss, oder weil die ausschließliche Verwendung von Einweg-Bauteilen für solche Komponenten technisch oder wirtschaftlich nicht sinnvoll ist. Es ist deshalb eine besondere Herausforderung, solche Komponenten, insbesondere Pumpen, Ventile oder Sensoren, zumindest teilweise in die Einweg-Module zu integrieren.

Im Falle einer Fluidpumpe kann etwa ein Pumpenmechanismus vorgesehen sein, der wenigstens teilweise aus Einweg-Bauteilen gebildet ist, welche fest in das Filtrationsmodul, insbesondere in die Filtrationsvorrichtung, oder das Reinigungsmodul integriert sind.

Beispielsweise kann der Pumpenmechanismus einen Einweg-Pumpenschlauch und einen wiederverwendbaren Antrieb aufweisen, insbesondere mit einem Rotor und einer daran angebrachten Rolleneinheit zum Verformen des Einweg-Pumpenschlauchs. So lässt sich eine Peristaltikpumpe realisieren, bei der der Pumpenschlauch als Einwegbauteil fest in das Filtrationsmodul oder das Reinigungsmodul integriert ist. Da der aufwendige Antriebsmechanismus mit Rotor und Rolleneinheit nicht mit dem Prozess- oder Reinigungsfluid im Pumpenschlauch in Berührung kommt, ist es vorteilhaft, diesen als externe wiederverwendbare Teileinheit des Pumpenmechanismus auszuführen.

Bei einer anderen Ausführungsform des Pumpenmechanismus weist dieser eine Einweg-Kolben-Zylinder-Einheit oder eine Einweg-Drückeinrichtung und einen wiederverwendbaren Antrieb zur Betätigung des Kolbens bzw. der Drückeinrichtung auf. Hier kann die mit dem Prozess- oder Reinigungsfluid in Kontakt kommende Kolben-Zylinder-Einheit bzw. Drückeinrichtung als Einweg-Baueinheit fest in das Filtrationsmodul, insbesondere in die Filtrationsvorrichtung, oder das Reinigungsmodul integriert werden, während wiederum der Antrieb unabhängig davon als externe wiederverwendbare Teileinheit des Pumpenmechanismus ausgeführt werden kann. Auf diese Weise lässt sich eine teilintegrierte Kolbenpumpe oder eine teilintegrierte Pumpe nach dem Prinzip eines manuell betätigbaren Seifenspenders oder einer manuell betätigbaren Sprühpumpe realisieren, die jedoch maschinell angetrieben wird.

Der Integrationsgedanke lässt sich für extern angetriebenes oder angesteuertes Ventil umsetzen, indem das Filtrationsmodul, insbesondere die Filtrationsvorrichtung, oder das Reinigungsmodul wenigstens einen Ventilanschluss aufweist. An den wenigstens einen Ventilanschluss des Filtrationsmoduls, der Filtrationsvorrichtung oder des Reinigungsmoduls ist ein teilweise aus Einweg-Bauteilen gebildeter Ventilmechanismus angeordnet, wobei diese Einweg-Bauteile fest in das Filtrationsmodul, insbesondere die Filtrationsvorrichtung, bzw. das Reinigungsmodul integriert sind. Die weiteren für den Ventilbetrieb notwendigen Bauteile können als externe wiederverwendbare Bauteile ausgeführt sein, insbesondere, wenn sie nicht in direkten Kontakt mit dem Prozess- oder Reinigungsfluid kommen. Bevorzugt handelt es sich bei diesen wiederverwendbaren Bauteilen um kritische Bauteile, die besonders präzise, belastbar und/oder zuverlässig sein müssen und als Einweg-Komponenten bei nur einmaligem Gebrauch zu unverhältnismäßig hohen Kosten führen würden.

Gemäß einer ersten Variante weist der Ventilmechanismus einen flexiblen Einweg-Schlauch und einen wiederverwendbaren geführten Stößel auf. Der Strömungsquerschnitt des fest in das Filtrationsmodul, insbesondere die Filtrationsvorrichtung, oder das Reinigungsmodul integrierten Einweg-Schlauchs lässt sich mit dem extern betätigbaren Stößel verändern, sodass sich auf diese Weise die Durchflussmenge einstellen lässt.

Gemäß einer zweiten Variante des Ventilmechanismus ist ein Einweg-Stößel in einer Einweg-Dichtung geführt. Der Stößel kann bei entsprechender Auslenkung in einen Strömungskanal des Filtrationsmoduls, insbesondere in einen Strömungskanal der Filtrationsvorrichtung, oder des Reinigungsmoduls eindringen und auf diese Weise die Durchflussmenge gezielt beeinflussen.

Eine dritte Variante des Ventilmechanismus basiert auf einer elastischen Membran, die als fest in das Filtrationsmodul, insbesondere in die Filtrationsvorrichtung, oder das Reinigungsmodul integriertes Einweg-Bauteil mittels eines wiederverwendbaren Stößels in einen Strömungskanal des Filtrationsmoduls, insbesondere in einen Strömungskanal der Filtrationsvorrichtung, oder des Reinigungsmoduls gedrückt werden kann.

Grundsätzlich ist es bei der ersten und der dritten Variante des Ventilmechanismus auch möglich, anstelle des wiederverwendbaren Stößels eine Druckgasquelle zur Beaufschlagung des Einweg-Schlauchs bzw. der Einweg-Membran vorzusehen.

Nach den zuvor beschriebenen Prinzipien lassen sich grundsätzlich auch komplexere Steuerungskomponenten realisieren, wie etwa 3-Wege-Ventile für Module mit mehreren Strömungspfaden, die von außerhalb des Moduls bedient bzw. angetrieben werden können. In jedem Fall ist eine solche Steuerungskomponente zum Teil aus Einweg-Bauteilen gebildet, die fest in das Filtrationsmodul bzw. das Reinigungsmodul integriert sind, während die weiteren Bauteile als externe wiederverwendbare Bauteile ausgeführt sein können, insbesondere, wenn sie nicht in direkten Kontakt mit dem Prozess- oder Reinigungsfluid kommen.

Für die Erfassung bestimmter Prozessparameter sind entsprechende Sensoren notwendig. Damit ein Sensor mit einem Einweg-Filtrationsmodul und/oder einem Einweg-Reinigungsmodul verwendet werden kann, wird vorgeschlagen, an einen Sensoranschluss des Filtrationsmoduls, insbesondere an einen Sensoranschluss dessen Filtrationsvorrichtung, oder des Reinigungsmoduls eine teilweise aus Einweg-Bauteilen gebildete Sensoreinrichtung, insbesondere eine Drucksensoreinrichtung, anzuordnen. Diese Einweg-Bauteile sind fest in das Filtrationsmodul, insbesondere in die Filtrationsvorrichtung, oder das Reinigungsmodul integriert.

Gemäß einem vorteilhaften Konzept kann über einer Mündung des Sensoranschlusses eine Einweg-Membran, insbesondere eine Druckmembran, gespannt sein, die mit einer an der Mündung angeordneten wiederverwendbaren Sensoreinrichtung, insbesondere einem Drucksensor, zusammenwirkt. Die flexible Membran ist also Teil der Einweg-Komponenten, während die typischerweise teure Sensoreinrichtung wiederverwendet werden kann. Im Falle einer auslenkbaren, aber undurchlässigen Druckmembran kommt der Drucksensor auf der dem Fluid gegenüberliegenden Seite nicht in Kontakt mit diesem und muss nicht gereinigt werden. Die Membran kann aber auch bewusst durchlässig gewählt werden, um Proben für die externe Untersuchung bestimmter Parameter wie etwa elektrische Leitfähigkeit, pH-Wert, Viskosität, Proteinkonzentration abzuzweigen.

Wie bereits erwähnt, umfasst die Erfindung auch ein spezielles Reinigungsmodul, das insgesamt als Einweg-Modul ausgelegt ist und zusammen mit dem Filtrationsmodul zu einem erfindungsgemäßen modularen Querstromfiltrationssystem gehört. Das Reinigungsmodul weist einen fest integrierten Reinigungsfluidbehälter auf. Dieser Behälter kann entweder bereits mit einem Reinigungsfluid befüllt sein, oder er dient zur Zwischenspeicherung eines extern zugeführten Reinigungsfluids.

Die Erfindung sieht vor, dass das Reinigungsmodul und das Filtrationsmodul hinsichtlich ihrer Fluidanschlüsse und ihrer mechanischen Anschlüsse so aufgebaut sind, dass sie alternativ an derselben Stelle in einem Filtrationssystem insbesondere einem Querstromfiltrationssystem, für niedervolumige Screening-Anwendungen angeordnet und angeschlossen werden können. Dies ermöglicht es, dass nach einem Experiment das gebrauchte Filtrationsmodul entfernt und entsorgt wird und ein Reinigungsmodul ohne großen Aufwand an derselben Stelle eingesetzt wird. Nach dem Reinigungsdurchlauf wird das wiederum entfernte und entsorgte Reinigungsmodul einfach durch das für das nächste Experiment vorgesehene neue Filtrationsmodul ersetzt. Auf diese Weise kann in kurzer Zeit eine Vielzahl von Experimenten äußerst effizient durchgeführt werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1 ein Filtrationsmodul mit einer fest integrierten Querstromfiltrationsvorrichtung für ein modulares Filtrationssystem;
- Figur 2 ein Filtrationsmodul mit einer einsetzbaren Querstromfiltrationsvorrichtung;
- Figur 3 ein Reinigungsmodul für ein modulares Filtrationssystem;
- Figur 4 eine Querstromfiltrationsvorrichtung mit einem teilweise integrierten Pumpenmechanismus ;
- Figur 5a eine erste Variante des Pumpenmechanismus für die Querstromfiltrationsvorrichtung aus Figur 4;
- Figur 5b eine zweite Variante des Pumpenmechanismus für die Querstromfiltrationsvorrichtung aus Figur 4;
- Figur 5c eine dritte Variante des Pumpenmechanismus für die Querstromfiltrationsvorrichtung aus Figur 4;
- Figur 6a eine seitliche Schnittansicht einer Querstromfiltrationsvorrichtung mit verschiedenen Anschlüssen;
- Figur 6b eine Unteransicht der Querstromfiltrationsvorrichtung aus Figur 6a;
- Figur 6c eine Draufsicht auf die Querstromfiltrationsvorrichtung aus Figur 6a; und
- Figur 7a eine erste Variante eines teilweise integrierten Ventilmechanismus einer Querstromfiltrationsvorrichtung;
- Figur 7b eine zweite Variante eines teilweise integrierten Ventilmechanismus einer Querstromfiltrationsvorrichtung;
- Figur 7c eine dritte Variante eines integrierten Ventilmechanismus einer Querstromfiltrationsvorrichtung;
- Figur 8a eine erste Variante eines teilweise integrierten Drucksensormechanismus einer Querstromfiltrationsvorrichtung; und
- Figur 8b eine zweite Variante eines teilweise integrierten Drucksensormechanismus einer Querstromfiltrationsvorrichtung.

Im Folgenden werden einzelne Module eines Querstromfiltrationssystems, die einzeln oder in Kombination miteinander verwendet werden können, sowie bestimmte Komponenten dieser Module beschrieben.

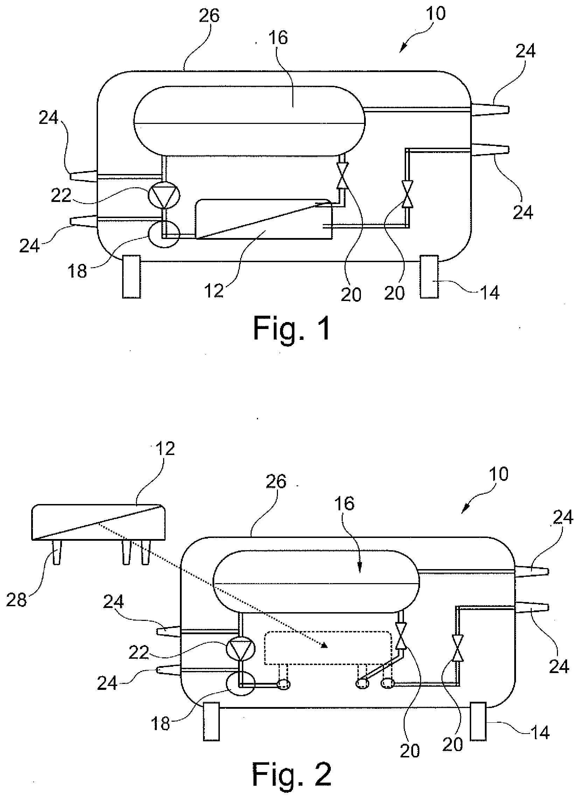

In Figur 1 ist schematisch ein Filtrationsmodul (cartridge) 10, mit einer fest integrierten Filtrationsvorrichtung, hier eine Querstromfiltrationsvorrichtung 12, dargestellt. Das Filtrationsmodul 10 ist für den Einsatz in einem modularen Filtrationssystem vorgesehen. Das Filtrationssystem kann eine automatisierte Filtrationsanlage bilden, an die das Filtrationsmodul 10 als vorgefertigte Einheit angesteckt werden kann. Hierfür sind geeignete Steckverbinder 14 am Modulgehäuse vorgesehen. Da das vollständige Filtrationsmodul 10 als Einweg-Modul ausgelegt ist, kann es nach Gebrauch als Ganzes entsorgt und für die folgende Anwendung durch ein neues Filtrationsmodul 10 ersetzt werden.

Das Filtrationsmodul 10, das im vorliegenden Fall zur Ultrafiltration oder Diafiltration vorgesehen ist, enthält wenigstens einen Einweg-Strömungspfad, in den ein Rezirkulationsbehälter 16 für Prozessfluid, wenigstens ein Teil einer oder mehrerer Sensoreinrichtungen 18, wenigstens ein extern angetriebenes Strömungsventil 20 und wenigstens ein Teil einer Pumpe 22 integriert sind. Das Filtrationsmodul 10 weist zudem eine Querstromfiltrationsvorrichtung 12 auf, die ebenfalls fest in den Einweg-Strömungspfad integriert ist. Des Weiteren sind am Filtrationsmodul 10 diverse Anschlüsse vorgesehen, insbesondere die zur Zufuhr und zur Abfuhr notwendigen Fluidanschlüsse 24. Es können noch weitere Anschlüsse vorgesehen sein, beispielsweise Fluidanschlüsse für eine externe Pumpe oder weitere Anschlüsse für Sensoren. Selbstverständlich können auch noch andere Komponenten in den Einweg-Strömungspfad integriert sein.

Die Außenwand 26 des Filtrationsmoduls 10 steht in Kontakt mit einer temperaturgeregelten Oberfläche des Filtrationssystems, beispielsweise mit einem Peltier-Element. Auf diese Weise lassen sich alle Komponenten des Filtrationsmoduls 10 auf eine gewünschte Temperatur bringen, und die Temperatur kann während eines Experiments konstant gehalten werden.

In Figur 2 ist ein Filtrationsmodul 10 gezeigt, das sich von dem zuvor beschriebenen Modul insbesondere dadurch unterscheidet, dass die Querstromfiltrationsvorrichtung 12 als separate Einweg-Einheit ausgebildet ist, die in das Filtrationsmodul 10 eingesetzt werden kann. Hierfür weist die Querstromfiltrationsvorrichtung 12 geeignete Steckverbinder 28 auf, die auf komplementäre Steckverbinder des Filtrationsmoduls 10 abgestimmt sind, sodass beispielsweise eine Rastverbindung entsteht. Beim Anstecken der Querstromfiltrationsvorrichtung 12 werden gleichzeitig auch alle erforderlichen Fluidverbindungen automatisch hergestellt.

Die Querstromfiltrationsvorrichtung 12 ist also nicht fest in das Filtrationsmodul 10 integriert. Vielmehr kann aus einer Mehrzahl von verschiedenen kompatiblen Querstromfiltrationsvorrichtungen 12 eine für das jeweilige Experiment geeignete Vorrichtung 12 ausgewählt und in das Filtrationsmodul 10 eingesetzt werden.

Bei einer anderen Ausführungsform ist der Strömungspfad des Filtrationsmoduls 10 als separate Einheit ausgebildet, der - wie oben im Zusammenhang mit der Querstromfiltrationsvorrichtung 12 beschrieben - in das Filtrationsmodul 10 einsetzbar ist. Die Querstromfiltrationsvorrichtung 12 ist dann entweder fest in den Strömungspfad integriert oder, wiederum als separate Einheit - an den Strömungspfad ansteckbar. Auch in diesen Fällen sind bevorzugt Rastverbindungen vorgesehen, und es werden beim Anstecken gleichzeitig alle erforderlichen Fluidverbindungen automatisch hergestellt.

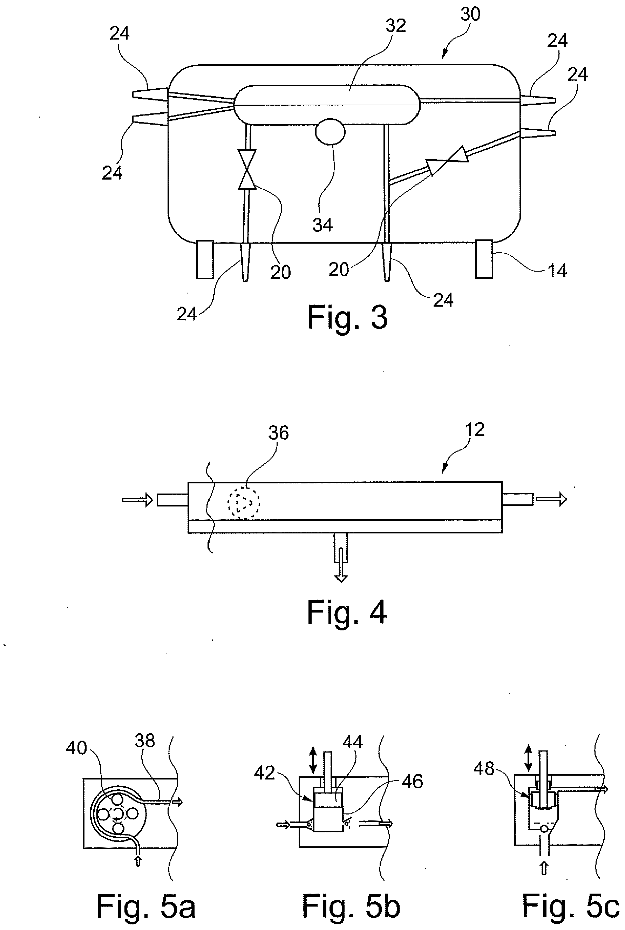

In Figur 3 ist schematisch ein Reinigungsmodul 30 für ein modulares Filtrationssystem dargestellt. Das Reinigungsmodul 30 ist so aufgebaut, dass es anstelle eines Filtrationsmoduls 10, insbesondere anstelle eines der oben beschriebenen Filtrationsmodule 10, im Filtrationssystem verwendet werden kann. Das bedeutet, dass das Reinigungsmodul 30 dank entsprechender Steckverbinder 14 genauso wie ein Filtrationsmodul 10 als vorgefertigte Einheit an eine automatisierte Filtrationsanlage angesteckt werden kann.

Das Reinigungsmodul 30 weist mehrere Fluidanschlüsse 24 auf, insbesondere für die Zufuhr und Abfuhr von Reinigungsfluid oder auch für den Anschluss einer externen Pumpe. Der Strömungspfad des Reinigungsmoduls 30, einschließlich eines Reinigungsfluidbehälters 32, ist fest in das Reinigungsmodul 30 integriert. Außerdem sind ein oder mehrere Sensoranschlüsse 34 und extern angetriebene Ventile 20 vorgesehen. Das Reinigungsmodul 30 kann noch weitere Strömungspfade aufweisen.

Das Reinigungsmodul 30 dient dazu, wiederverwendbare Komponenten der Filtrationsanlage durch Spülen mit Reinigungsfluid zu reinigen. Zu den wiederverwendbaren Komponenten gehören beispielsweise Schlauchleitungen oder Pumpen. Das hierfür benötigte Reinigungsfluid kann entweder bereits im Reinigungsfluidbehälter 32 vorhanden sein oder über die Fluidanschlüsse 24 des Reinigungsmodul 30 von einer externen Quelle zugeführt und ggf. im Reinigungsfluidbehälter 32 zwischengespeichert werden.

In Figur 4 ist schematisch eine Querstromfiltrationsvorrichtung 12 mit einem symbolisch angedeuteten Pumpenmechanismus 36 dargestellt. Die Querstromfiltrationsvorrichtung 12 kann in ein Filtrationsmodul 10 integriert sein (vgl. Figur 1) oder als separate Einheit in ein solches Modul 10 einsetzbar sein (vgl. Figur 2). Nachfolgend werden mehrere Varianten des teilweise in die Querstromfiltrationsvorrichtung 12 integrierten Pumpenmechanismus 36 beschrieben.

Figur 5a zeigt einen Mechanismus für eine Schlauchpumpe (Peristaltikpumpe), bei dem ein durch Rollen verformbarer Pumpenschlauch 38 als Einweg-Bauteil ausgelegt und fest in die Querstromfiltrationsvorrichtung 12 integriert ist. Ein Rotor mit einer daran angebrachten Rolleneinheit 40, die ebenfalls Bestandteile des Pumpenmechanismus 36 sind, sind als wiederverwendbare separate Bauteile oder als wiederverwendbare separate Einheit ausgelegt und nicht fest in die Querstromfiltrationsvorrichtung 12 integriert. Der Rotor mit der Rolleneinheit 40 kann, z. B. mittels eines Klickmechanismus, so in die Querstromfiltrationsvorrichtung 12 eingesteckt werden, dass die Rolleneinheit 40 in Wirkverbindung mit dem Pumpenschlauch 38 steht und der Pumpenmechanismus 36 dann sofort betriebsbereit ist.

Figur 5b zeigt einen Mechanismus für eine Kolbenpumpe mit Halteventilen. Die Kolben-Zylinder-Einheit 42 der Kolbenpumpe ist als Einweg-Bauteil ausgelegt und fest in die Querstromfiltrationsvorrichtung 12 integriert (wobei der Kolben 44 selbstverständlich im Zylinder 46 verschiebbar ist). Die Antriebseinheit hingegen, mit der der Kolben 44 angetrieben wird, ist als wiederverwendbare separate Einheit ausgelegt und nicht fest in die Querstromfiltrationsvorrichtung 12 integriert. Die Antriebseinheit wird in geeigneter Weise an den Kolben 44 gekoppelt. Um eine kontinuierliche Strömung aufrechtzuerhalten, können auch zwei solcher Pumpen für die Querstromfiltrationsvorrichtung 12 vorgesehen sein.

Figur 5c zeigt einen Pumpenmechanismus 36, der dem eines manuell betätigbaren Seifenspenders oder einer manuell betätigbaren Sprühpumpe ähnelt. Die wesentlichen Teile des eigentlichen Pumpenmechanismus 36, einschließlich einer Drückeinrichtung 48, sind als Einweg-Bauteile ausgelegt und fest in die Querstromfiltrationsvorrichtung 12 integriert (wobei ein Teil der Drückeinrichtung 48 selbstverständlich verschiebbar ist). Wie bei der zuvor beschriebenen Variante ist die Antriebseinheit, mit der die Drückeinrichtung 48 angetrieben wird, als wiederverwendbare separate Einheit ausgelegt und nicht fest in die Querstromfiltrationsvorrichtung 12 integriert. Die Antriebseinheit wird in geeigneter Weise an die Drückeinrichtung 48 gekoppelt. Um eine kontinuierliche Strömung aufrechtzuerhalten, können auch zwei solcher Pumpen für die Querstromfiltrationsvorrichtung 12 vorgesehen sein.

Die oben beschriebenen Pumpenmechanismen 36 sind nicht nur für eine Querstromfiltrationsvorrichtung 12 des Filtrationsmoduls, sondern auch für ein Reinigungsmodul 30 zur Förderung des Reinigungsfluids geeignet.

Die oben beschriebenen Pumpenmechanismen 36 können auch an anderen als den beschriebenen Stellen eines Einweg-Filtrationsmoduls 10, beispielsweise an einem Einweg-Strömungspfad, vorgesehen sein.

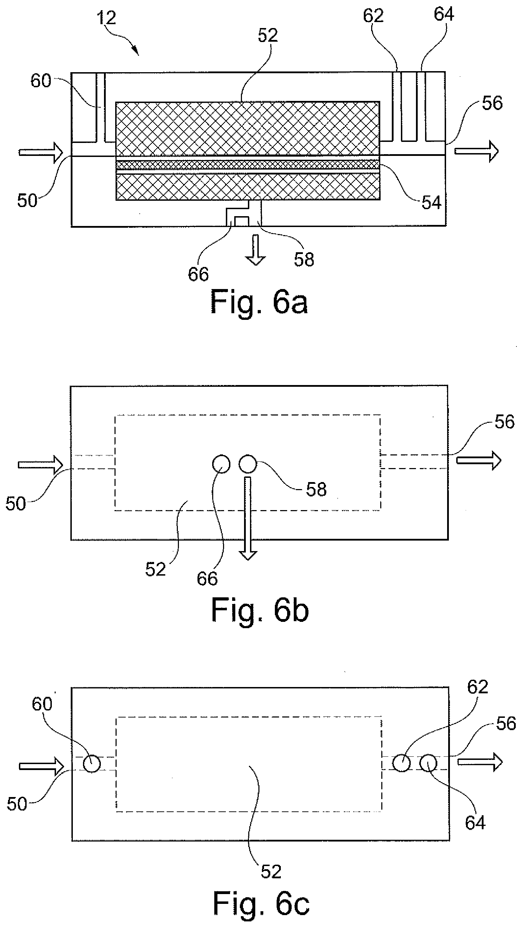

In den Figuren 6a bis 6c ist beispielhaft eine Querstromfiltrationsvorrichtung 12 mit verschiedenen Anschlüssen in verschiedenen Ansichten dargestellt. Die Anschlüsse sind fest in die Querstromfiltrationsvorrichtung 12 oder in einen in die Querstromfiltrationsvorrichtung 12 einsetzbaren Einweg-Strömungspfad integriert. Die Querstromfiltrationsvorrichtung 12 kann wiederum in ein Filtrationsmodul 10 integriert sein (vgl. Figur 1) oder als separate Einheit in ein solches Modul 10 einsetzbar sein (vgl. Figur 2).

Wie in der Schnittansicht der Figur 6a zu erkennen ist, befindet sich in Strömungsrichtung hinter einem Fluideingang 50 eine Filtereinrichtung 52 mit einer Filtermembran 54, die auf einer ersten Seite vom Prozessfluid überströmt wird. An einem ersten Fluidausgang 56 tritt das auf der ersten Seite der Filtermembran 54 verbliebene Retentat aus. An einem zweiten Fluidausgang 58 auf der anderen Seite der Filtermembran 54 tritt das quer zur Strömungsrichtung durch die Filtermembran 54 abgezogene Permeat aus. Während der Fluideingang 50 und der erste Fluidausgang 56 an gegenüberliegenden Seitenwänden der Querstromfiltrationsvorrichtung 12 angeordnet sind, befindet sich der zweite Fluidausgang 58 in der Bodenwand der Vorrichtung 12.

Zwischen dem Fluideingang 50 und der Filtereinrichtung 52 ist ein erster Drucksensoranschluss 60 vorgesehen. Genauer gesagt führt der erste Drucksensoranschluss 60 von der oberen Wand der Querstromfiltrationsvorrichtung 12 in den Kanal, der vom Fluideingang 50 zur Filtereinrichtung 52 verläuft. Ein zweiter Drucksensoranschluss 62 und ein Ventilanschluss 64 führen jeweils von der oberen Wand in den Kanal zwischen der Filtereinrichtung 52 und dem ersten Fluidausgang 56. Ein dritter Drucksensoranschluss 66 führt von der Bodenwand in den Kanal zwischen der Filtereinrichtung 52 und dem zweiten Fluidausgang 58, d. h. der zweite Fluidausgang 58 und der dritte Drucksensoranschluss 66 sind nebeneinander angeordnet.

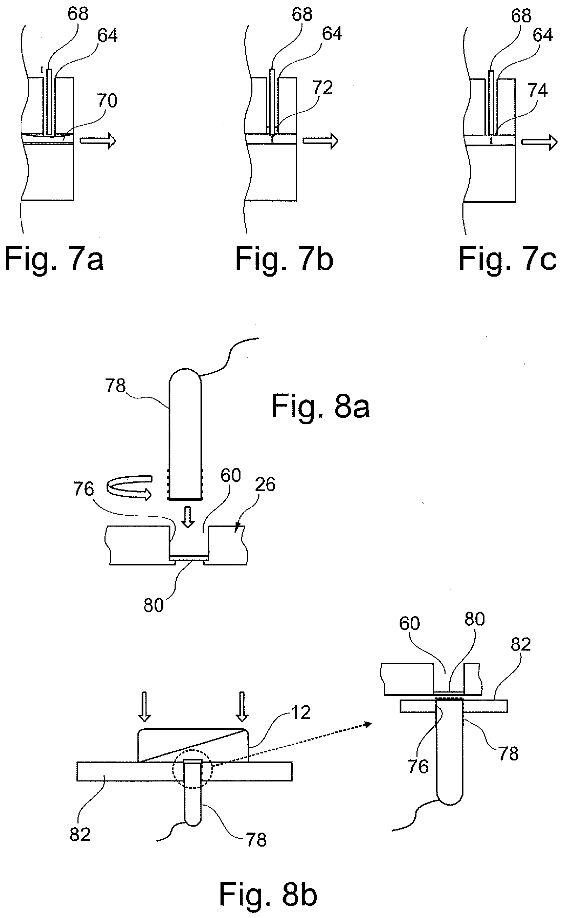

In den Figuren 7a bis 7c sind drei Varianten eines teilweise in die Querstromfiltrationsvorrichtung 12 integrierten Ventilmechanismus gezeigt, die für den in den Figuren 6a und 6c zu sehenden Ventilanschluss 64 zwischen der Filtereinrichtung 52 und dem ersten Fluidausgang 56 oder für andere Ventilanschlüsse der Querstromfiltrationsvorrichtung 12 verwendet werden können. Nachfolgend werden Varianten am Beispiel des Ventilanschlusses 64 erläutert.

Bei der in Figur 7a gezeigten Variante ist ein Stößel 68 axial beweglich im Ventilanschluss 64 geführt. Der von der Filtereinrichtung 52 zum ersten Fluidausgang 56 verlaufende Kanal ist wenigstens teilweise als elastischer Schlauch 70 ausgebildet. Der Ventilanschluss 64 ist so angeordnet, dass der Stößel 68 an einem ersten Ende in Richtung des Schlauchs 70 gedrückt werden kann, sodass das gegenüberliegende zweite Ende des Stößels 68 den Schlauch 70 zusammendrückt. Dadurch kann die Querschnittsfläche des Schlauchinneren verkleinert und der Durchfluss entsprechend reduziert werden. Der elastische Schlauch 70 ist in der Lage, den Stößel 68 wieder zurückzudrängen, wenn kein (oder nur ein geringer) Druck auf dessen zweites Ende ausgeübt wird. Während der elastische Schlauch 70 eine fest in die Querstromfiltrationsvorrichtung 12 integrierte Einweg-Komponente ist, sind der Stößel 68 und etwaige an diesen gekoppelte Betätigungselemente, mit denen die Position des Stößels 68 eingestellt wird, als separate wiederverwendbare Bauteile ausgelegt und nicht fest in die Querstromfiltrationsvorrichtung 12 integriert.

Im Gegensatz zu der vorher beschriebenen Variante ist bei der in Figur 7b gezeigten Variante kein flexibler Schlauch vorgesehen. Vielmehr ist an der Mündung des Ventilanschlusses 64 zu dem von der Filtereinrichtung 52 zum ersten Fluidausgang 56 verlaufenden Kanal eine flexible Dichtung 72 vorgesehen, die den Kanal gegenüber dem Ventilanschluss 64 abdichtet. In der Dichtung 72 ist ein Stößel 68 oder ein Keil so geführt, dass er im Wesentlichen senkrecht in den Kanal eintauchen kann. Auf diese Weise wird der Strömungsquerschnitt verringert. Der Stößel 68 bzw. Keil kann durch Ziehen wieder zurückbewegt werden. Hier sind sowohl der Stößel 68 bzw. Keil als auch die Dichtung 72 als Einweg-Komponenten ausgelegt und fest in die Querstromfiltrationsvorrichtung 12 integriert (wobei der Stößel 68 selbstverständlich im Ventilanschluss 64 verschiebbar ist).

Bei der in Figur 7c gezeigten Variante ist anstelle der Dichtung eine elastische Membran 74 über die Mündung des Ventilanschlusses 64 in den Kanal gespannt. Die Membran 74 kann durch einen Stößel 68 so in den Kanal gedrückt werden, dass sich der Strömungsquerschnitt verringert. Die Membran 74 stellt - ähnlich wie der Schlauch 70 bei der Variante nach Figur 7a - eine Sterilbarriere dar, sodass der Stößel 68 und etwaige an diesen gekoppelte Betätigungselemente, mit denen die Position des Stößels 68 eingestellt wird, als separate wiederverwendbare Bauteile ausgelegt sein können und dementsprechend nicht fest in die Querstromfiltrationsvorrichtung 12 integriert sind, während die Membran 74 eine fest in die Querstromfiltrationsvorrichtung 12 integrierte Einweg-Komponente ist.

Insbesondere bei der zuletzt beschriebenen Variante kann anstelle des Stößels 68 auch Druckgas zur Auslenkung der Membran 74 verwendet werden.

Ein Ventilanschluss kann auch an anderen als den beschriebenen Stellen eines Einweg-Filtrationsmoduls 10, an einem Einweg-Strömungspfad oder einem Reinigungsmodul 30 vorgesehen sein.

In den Figuren 8a und 8b sind zwei Varianten eines teilweise in eine Querstromfiltrationsvorrichtung 12 integrierten Drucksensormechanismus dargestellt, wie sie beispielsweise in den in den Figuren 6a bis 6c zu sehenden Drucksensoranschlüssen 60, 62, 66 verwendet werden können.

Bei der in Figur 8a gezeigten Variante ist am außenseitigen Ende des Drucksensoranschlusses 60, z. B. in eine Mündung in der Außenwand der Querstromfiltrationsvorrichtung 12, einem Flansch, einem Anschlussstutzen oder dergleichen, ein Gewinde 76 eingebracht, in das ein Drucksensor 78 mit passendem Gegengewinde geschraubt wird. Eine Druckmembran 80 aus einem Elastomer ist so am außenseitigen Ende des Drucksensoranschlusses 60 eingespannt, dass ihre druckabhängige Auslenkung ein entsprechendes Signal im Drucksensor 78 auslöst. Während die Druckmembran 80 eine fest in die Querstromfiltrationsvorrichtung 12 integrierte Einweg-Komponente ist, ist der Drucksensor 78 als wiederverwendbare separate Komponente ausgelegt und nicht fest in die Querstromfiltrationsvorrichtung 12 integriert.

Im Unterschied zu der zuvor beschriebenen Variante ist bei der in Figur 8b gezeigten Variante der Drucksensor 78 nicht in ein Gewinde der Querstromfiltrationsvorrichtung 12, sondern in ein Gewinde 76 geschraubt, das in einer Öffnung einer Grundplatte 82 des Filtrationssystems gebildet ist. Auf dieser Grundplatte 82 ist die Querstromfiltrationsvorrichtung 12 mit der Druckmembran 80 so über dem Drucksensor 78 angeordnet und befestigt, dass die Druckmembran 80 bei Druckbeaufschlagung in Richtung des Drucksensors 78 ausgelenkt und entsprechendes Signal im Drucksensor 78 auslöst.

Die Druckmembran 80 und/oder der Drucksensor 78 können auch an anderen als den beschriebenen Stellen eines Einweg-Filtrationsmoduls 10, an einem Einweg-Strömungspfad oder einem Reinigungsmodul 30 vorgesehen sein.

Es können noch andere Sensoreinrichtungen an solchen Anschlüssen an einer Querstromfiltrationsvorrichtung 12 oder an einer anderen Stelle eines Einweg-Filtrationsmoduls 10, an einem Einweg-Strömungspfad oder einem Reinigungsmodul 30 vorgesehen sein, wie etwa Sensoreinrichtungen zur Bestimmung der elektrischen Leitfähigkeit, des pH-Werts, der Viskosität oder der Proteinkonzentration unter Verwendung eines geeigneten UV-Sensors oder sonstiger Spektroskopie. In diesen Fällen ist anstelle der Druckmembran 80 eine permeable Membran oder eine sonstige Einrichtung zur Abzweigung einer Fluidmenge vorgesehen.

Das automatisierte Filtrationssystem mit den beschriebenen Modulen 10, 30 und Komponenten ist hauptsächlich zur Konzentration und Diafiltration (speziell zur Stabilisierung, Endformulierung und/oder Störstoffabscheidung) von Proteinlösungen in Querstrom-Technologie vorgesehen. Die Module 10, 30 und Komponenten können an verschiedene Arten der Querstromfiltration angepasst werden, insbesondere an sogenannte "single-pass"-, "batch"- oder "feed-and-bleed"-Konfigurationen. Grundsätzlich kann das automatisierte Filtrationssystem auch für andere Filtrationstechnologien ausgelegt werden, wie etwa die klassische "dead-end"-Filtration.

### Bezugszeichenliste

- 10: Filtrationsmodul
- 12: Querstromfiltrationsvorrichtung
- 14: Steckverbinder (Modul)
- 16: Rezirkulationsbehälter
- 18: Sensoreinrichtung
- 20: Ventil
- 22: Pumpe
- 24: Fluidanschluss
- 26: Außenwand
- 28: Steckverbinder (Querstromfiltrationsvorrichtung)
- 30: Reinigungsmodul
- 32: Reinigungsfluidbehälter
- 34: Sensoranschluss
- 36: Pumpenmechanismus
- 38: Pumpenschlauch
- 40: Rolleneinheit
- 42: Kolben-Zylinder-Einheit
- 44: Kolben
- 46: Zylinder
- 48: Drückeinrichtung
- 50: Fluideingang
- 52: Filtereinrichtung
- 54: Filtermembran
- 56: erster Fluidausgang
- 58: zweiter Fluidausgang
- 60: erster Drucksensoranschluss
- 62: zweiter Drucksensoranschluss
- 64: Ventilanschluss
- 66: dritter Drucksensoranschluss
- 68: Stößel
- 70: Schlauch
- 72: Dichtung
- 74: Membran
- 76: Gewinde
- 78: Drucksensor
- 80: Druckmembran
- 82: Grundplatte

## Patentansprüche

1. Modulares Querstromfiltrationssystem, für niedervolumige Screening-Anwendungen, mit
einem vorgefertigten Filtrationsmodul (10), wobei das Filtrationsmodul (10) Fluidanschlüsse (24) und mehrere, auf niedervolumige Screening-Anwendungen abgestimmte Komponenten aufweist, die fest in das Filtrationsmodul (10) integriert sind, wobei das gesamte Filtrationsmodul (10) als Einweg-Filtrationsmodul ausgelegt ist, und
einem Reinigungsmodul (30) zum Reinigen von wiederverwendbaren Komponenten des Filtrationssystems, wobei das gesamte Reinigungsmodul (30) als Einweg-Reinigungsmodul ausgelegt ist und einen fest integrierten, mit einem Reinigungsfluid befüllten Reinigungsfluidbehälter (32) aufweist,
wobei das Filtrationsmodul (10) und das Reinigungsmodul (30) hinsichtlich ihrer Fluidanschlüsse (24) und ihrer mechanischen Anschlüsse so aufgebaut sind, dass sie alternativ an derselben Stelle im Filtrationssystem angeordnet und angeschlossen werden können.

2. Modulares Querstromfiltrationssystem nach Anspruch 1, **gekennzeichnet durch** eine separate Einweg-Querstromfiltrationsvorrichtung (12) mit einem Filter, die als Einheit in oder an das Filtrationsmodul (10) gesteckt ist.

3. Modulares Querstromfiltrationssystem nach Anspruch 1, **gekennzeichnet durch** eine fest integrierte Querstromfiltrationsvorrichtung (12) mit einem Filter.

4. Modulares Querstromfiltrationssystem nach einem der vorhergehenden Ansprüche, **gekennzeichnet durch** einen Einweg-Strömungspfad im Filtrationsmodul (10), in den wenigstens eine der folgenden Komponenten wenigstens teilweise fest integriert ist: ein Rezirkulationsbehälter (16) für Prozessfluid; ein Sensor (18); ein Strömungsventil (20); eine Pumpe (22); ein Vorratsbehälter für ein Diafiltrationsmedium; ein Anschuss zur Zuführung eines Mediums von einer externen Quelle.

5. Modulares Querstromfiltrationssystem nach Anspruch 3 und Anspruch 4, **dadurch gekennzeichnet, dass** die Filtrationsvorrichtung (12) fest in den Einweg-Strömungspfad integriert ist.

6. Modulares Querstromfiltrationssystem nach einem der vorhergehenden Ansprüche, **gekennzeichnet durch** eine Temperaturregelung für das Filtrationsmodul (10), wobei vorzugsweise eine Außenwand (26) des Filtrationsmoduls (10) an eine temperaturgeregelte Oberfläche, insbesondere eines Peltier-Elements, gekoppelt ist.

7. Modulares Querstromfiltrationssystem nach einem der Ansprüche 2 bis 6, **gekennzeichnet, durch** wenigstens einen Pumpenmechanismus (36), der wenigstens teilweise aus Einweg-Bauteilen gebildet ist, welche fest in das Filtrationsmodul (10), insbesondere in die Filtrationsvorrichtung (12) integriert sind, wobei vorzugsweise der Pumpenmechanismus (36) einen Einweg-Pumpenschlauch (38) und einen wiederverwendbaren Antrieb aufweist, insbesondere mit einem Rotor und einer daran angebrachten Rolleneinheit (40) zum Verformen des Einweg-Pumpenschlauchs (38), oder der Pumpenmechanismus (36) eine Einweg-Kolben-Zylinder-Einheit (42) oder eine Einweg-Drückeinrichtung (48) und einen wiederverwendbaren Antrieb zur Betätigung des Kolbens (44) bzw. der Drückeinrichtung (48) aufweist.

8. Modulares Querstromfiltrationssystem nach einem der vorhergehenden Ansprüche, **dadurch gekennzeichnet, dass** das Filtrationsmodul, insbesondere die Filtrationsvorrichtung (12), wenigstens einen Ventilanschluss (64) aufweist, an dem ein teilweise aus Einweg-Bauteilen gebildeter Ventilmechanismus angeordnet ist, wobei die Einweg-Bauteile fest in das Filtrationsmodul (10), insbesondere in die Filtrationsvorrichtung (12), integriert sind.

9. Modulares Querstromfiltrationssystem nach Anspruch 8, **dadurch gekennzeichnet, dass** der Ventilmechanismus einen flexiblen Einweg-Schlauch (70) und einen wiederverwendbaren geführten Stößel (68) aufweist, mit dem der Strömungsquerschnitt des Einweg-Schlauchs (70) veränderbar ist.

10. Modulares Querstromfiltrationssystem nach Anspruch 8, **dadurch gekennzeichnet, dass** der Ventilmechanismus einen in einer Einweg-Dichtung (72) geführten Einweg-Stößel (68) aufweist, der in einen Strömungskanal des Filtrationsmoduls (10), insbesondere in einen Strömungskanal der Filtrationsvorrichtung (12) eindringen kann.

11. Modulares Querstromfiltrationssystem nach Anspruch 8, **dadurch gekennzeichnet, dass** der Ventilmechanismus eine elastische Einweg-Membran (74) aufweist, die mittels eines wiederverwendbaren Stößels (68) in einen Strömungskanal des Filtrationsmoduls (10), insbesondere in einen Strömungskanal der Filtrationsvorrichtung (12) gedrückt werden kann.

12. Modulares Querstromfiltrationssystem nach Anspruch 9 oder 11, **dadurch gekennzeichnet, dass** anstelle des wiederverwendbaren Stößels (68) eine Druckgasquelle zur Beaufschlagung des Einweg-Schlauchs (70) bzw. der Einweg-Membran (74) vorgesehen ist.

13. Modulares Querstromfiltrationssystem nach einem der vorhergehenden Ansprüche, **dadurch gekennzeichnet, dass** das Filtrationsmodul (10), insbesondere dessen Filtrationsvorrichtung (12), wenigstens einen Sensoranschluss (34) aufweist, an dem eine teilweise aus Einweg-Bauteilen gebildete Sensoreinrichtung (18), insbesondere eine Drucksensoreinrichtung, angeordnet ist, wobei die Einweg-Bauteile fest in das Filtrationsmodul (10), insbesondere in die Filtrationsvorrichtung (12) integriert sind, wobei vorzugsweise über eine Mündung des Sensoranschlusses (34) eine Einweg-Membran (74), insbesondere eine Druckmembran, gespannt ist, die mit einer an der Mündung angeordneten wiederverwendbaren Sensoreinrichtung (18), insbesondere einem Drucksensor (78), zusammenwirkt.

## Claims

1. Modular cross-flow filtration system, for low-volume screening applications, comprising
a prefabricated filtration module (10), wherein the filtration module (10) includes fluid ports (24) and a plurality of components adjusted to low-volume screening applications, which are firmly integrated into the filtration module (10), wherein the entire filtration module (10) is designed as a single-use filtration module, and
a cleaning module (30) for cleaning reusable components of the filtration system, wherein the entire cleaning module (30) is designed as a single-use cleaning module and includes a firmly integrated cleaning fluid container (32) filled with a cleaning fluid,
wherein the fluid ports (24) and the mechanical ports of the filtration module (10) and the cleaning module (30) are constructed such that they can alternatively be arranged and connected at the same point in the filtration system.

2. Modular cross-flow filtration system according to claim 1, **characterized by** a separate single-use cross-flow filtration device (12) comprising a filter, which is plugged into or onto the filtration module (10) as a unit.

3. Modular cross-flow filtration system according to claim 1, **characterized by** a firmly integrated cross-flow filtration device (12) comprising a filter.

4. Modular cross-flow filtration system according to any one of the preceding claims, **characterized by** a single-use flow path in the filtration module (10), into which at least one of the following components is at least partly firmly integrated: a recirculation container (16) for process fluid; a sensor (18); a flow valve (20); a pump (22); a storage container for a diafiltration medium; a port for supplying a medium from an external source.

5. Modular cross-flow filtration system according to claim 3 and claim 4, **characterized in that** the filtration device (12) is firmly integrated into the single-use flow path.

6. Modular cross-flow filtration system according to any one of the preceding claims, **characterized by** a temperature control for the filtration module (10), wherein preferably an outer wall (26) of the filtration module (10) is coupled to a temperature-controlled surface, in particular of a Peltier element.

7. Modular cross-flow filtration system according to any one of claims 2 to 6, **characterized by** at least one pump mechanism (36) which is at least partly formed of single-use components which are firmly integrated into the filtration module (10), in particular into the filtration device (12), wherein preferably the pump mechanism (36) includes a single-use pump hose (38) and a reusable drive, in particular with a rotor and a roller unit (40) mounted thereon for deforming the single-use pump hose (38), or the pump mechanism (36) includes a single-use piston-cylinder unit (42) or a single-use pressing device (48) and a reusable drive for actuating the piston (44) or the pressing device (48).

8. Modular cross-flow filtration system according to any one of the preceding claims, **characterized in that** the filtration module, in particular the filtration device (12), includes at least one valve port (64) on which a valve mechanism partly formed of single-use components is arranged, wherein the single-use components are firmly integrated into the filtration module (10), in particular into the filtration device (12).

9. Modular cross-flow filtration system according to claim 8, **characterized in that** the valve mechanism includes a flexible single-use hose (70) and a reusable guided tappet (68), by means of which the flow cross-section of the single-use hose (70) can be changed.

10. Modular cross-flow filtration system according to claim 8, **characterized in that** the valve mechanism includes a single-use tappet (68) guided in a single-use seal (72), which tappet can penetrate into a flow channel of the filtration module (10), in particular into a flow channel of the filtration device (12).

11. Modular cross-flow filtration system according to claim 8, **characterized in that** the valve mechanism includes an elastic single-use membrane (74) which by means of a reusable tappet (68) can be pressed into a flow channel of the filtration module (10), in particular into a flow channel of the filtration device (12).

12. Modular cross-flow filtration system according to claim 9 or 11, **characterized in that**, instead of the reusable tappet (68), a compressed gas source is provided for pressurizing the single-use hose (70) or the single-use membrane (74).

13. Modular cross-flow filtration system according to any one of the preceding claims, **characterized in that** the filtration module (10), in particular its filtration device (12), includes at least one sensor port (34) on which a sensor device (18), in particular a pressure sensor device, partly formed of single-use components is arranged, wherein the single-use components are firmly integrated into the filtration module (10), in particular into the filtration device (12), wherein preferably a single-use membrane (74), in particular a pressure membrane, is stretched over an orifice of the sensor port (34), which membrane cooperates with a reusable sensor device (18), in particular a pressure sensor (78), arranged on the orifice.

## Revendications

1. Système de filtration à courant transversal modulaire, pour des applications de criblage à faible volume, comprenant
un module de filtration (10) préfabriqué, dans lequel le module de filtration (10) présente des raccords de fluide (24) et plusieurs composants adaptés à des applications de criblage à faible volume, qui sont intégrés de manière fixe dans le module de filtration (10), dans lequel l'ensemble du module de filtration (10) est configuré sous la forme d'un module de filtration à usage unique, et
un module de nettoyage (30) pour nettoyer les composants réutilisables du système de filtration, dans lequel l'ensemble du module de nettoyage (30) est configuré sous la forme d'un module de nettoyage à usage unique et présente un récipient de fluide de nettoyage (32) intégré de manière fixe, rempli d'un fluide de nettoyage,
dans lequel le module de filtration (10) et le module de nettoyage (30) sont conçus en ce qui concerne leurs raccords de fluide (24) et leurs raccords mécaniques de sorte qu'ils peuvent être disposés et raccordés alternativement au même endroit dans le système de filtration.

2. Système de filtration à écoulement transversal modulaire selon la revendication 1, **caractérisé par** un dispositif de filtration à écoulement transversal à usage unique (12) séparé avec un filtre, qui est inséré sous la forme d'une unité dans ou sur le module de filtration (10).

3. Système de filtration à écoulement transversal modulaire selon la revendication 1, **caractérisé par** un dispositif de filtration à écoulement transversal (12) intégré de manière fixe avec un filtre.

4. Système de filtration à écoulement transversal modulaire selon l'une quelconque des revendications précédentes, **caractérisé par** un trajet d'écoulement à usage unique dans le module de filtration (10), dans lequel au moins un des composants suivants est intégré au moins en partie de manière fixe : un récipient de recirculation (16) pour le fluide de traitement ; un capteur (18) ; une soupape d'écoulement (20) ; une pompe (22) ; un récipient de stockage pour un milieu de diafiltration ; un raccord pour l'amenée d'un milieu à partir d'une source externe.

5. Système de filtration à écoulement transversal modulaire selon la revendication 3 et la revendication 4, **caractérisé en ce que** le dispositif de filtration (12) est intégré de manière fixe dans le trajet d'écoulement à usage unique.

6. Système de filtration à écoulement transversal modulaire selon l'une quelconque des revendications précédentes, **caractérisé par** une régulation de température pour le module de filtration (10), dans lequel de préférence une paroi extérieure (26) du module de filtration (10) est accouplée à une surface régulée en température, en particulier d'un élément Peltier.

7. Système de filtration à écoulement transversal modulaire selon l'une quelconque des revendications 2 à 6, **caractérisé par** au moins un mécanisme de pompage (36), qui est formé au moins en partie de pièces à usage unique, lesquelles sont intégrées de manière fixe dans le module de filtration (10), en particulier dans le dispositif de filtration (12), dans lequel de préférence le mécanisme de pompage (36) présente un tuyau de pompage à usage unique (38) et un entraînement réutilisable, en particulier avec un rotor et une unité de rouleau (40) montée sur celui-ci pour déformer le tuyau de pompage à usage unique (38), ou le mécanisme de pompage (36) présente une unité piston-cylindre à usage unique (42) ou un dispositif de pression à usage unique (48) et un entraînement réutilisable pour l'actionnement du piston (44) ou du dispositif de pression (48).

8. Système de filtration à écoulement transversal modulaire selon l'une quelconque des revendications précédentes, **caractérisé en ce que** le module de filtration, en particulier le dispositif de filtration (12), présente au moins un raccord de soupape (64), sur lequel est disposé un mécanisme de soupape formé en partie de pièces à usage unique, dans lequel les pièces à usage unique sont intégrées de manière fixe dans le module de filtration (10), en particulier dans le dispositif de filtration (12).

9. Système de filtration à écoulement transversal modulaire selon la revendication 8, **caractérisé en ce que** le mécanisme de soupape présente un tuyau à usage unique (70) flexible et un poussoir (68) guidé réutilisable, avec lequel la section transversale d'écoulement du tuyau à usage unique (70) peut être modifiée.

10. Système de filtration à écoulement transversal modulaire selon la revendication 8, **caractérisé en ce que** le mécanisme de soupape présente un poussoir à usage unique (68) guidé dans un joint d'étanchéité à usage unique (72), qui peut pénétrer dans un canal d'écoulement du module de filtration (10), en particulier dans un canal d'écoulement du dispositif de filtration (12).

11. Système de filtration à écoulement transversal modulaire selon la revendication 8, **caractérisé en ce que** le mécanisme de soupape présente une membrane à usage unique (74) élastique, qui peut être pressée dans un canal d'écoulement du module de filtration (10), en particulier dans un canal d'écoulement du dispositif de filtration (12) au moyen d'un poussoir (68) réutilisable.

12. Système de filtration à écoulement transversal modulaire selon la revendication 9 ou 11, **caractérisé en ce qu'**une source de gaz comprimé pour solliciter le tuyau à usage unique (70) ou la membrane à usage unique (74) est prévue à la place du poussoir (68) réutilisable.

13. Système de filtration à écoulement transversal modulaire selon l'une quelconque des revendications précédentes, **caractérisé en ce que** le module de filtration (10), en particulier le dispositif de filtration (12) de celui-ci, présente au moins un raccord de capteur (34) sur lequel est disposé un dispositif de capteur (18) formé en partie de pièces à usage unique, en particulier un dispositif de capteur de pression, dans lequel les pièces à usage unique sont intégrées de manière fixe dans le module de filtration (10), en particulier dans le dispositif de filtration (12), dans lequel de préférence une membrane à usage unique (74), en particulier une membrane à pression, qui coopère avec un dispositif de capteur (18) réutilisable disposé sur l'embouchure, en particulier un capteur de pression (78), est tendue au-dessus d'une embouchure du raccord de capteur (34).
